# EUROPEAN PATENT APPLICATION

(11) **EP 2 336 251 A1**
(43) Date of publication of application: **22.06.2011**
(21) Application number: 10194926.1
(22) Date of filing: 14.12.2010
(51) Int. Cl.: C09D 11/00

(54) **Inkjet emulsion ink**

(30) Priority: 21.12.2009 US 288450 P
(71) Applicant: Kabushiki Kaisha Toshiba, Tokyo 105-8001 (JP); Toshiba TEC Kabushiki Kaisha, Tokyo 141-8664 (JP)
(72) Inventor: Akiyama, Ryozo, Shinagawa-ku Tokyo 141-8664 (JP); Hara, Takafumi, Shinagawa-ku Tokyo 141-8664 (JP); Yoshida, Maiko, Shinagawa-ku Tokyo 141-8664 (JP)
(74) Representative: Gendron, Vincent Christian

(57) **Abstract**

According to one embodiment, an inkjet emulsion ink includes an aqueous liquid, a color pigment dispersed in the aqueous liquid, an oil liquid, a white pigment dispersed in the oil liquid, and polyvinyl alcohol. The aqueous liquid content of the inkjet emulsion ink is W_{AQ}, and the oil liquid content of the inkjet emulsion ink is W_{OL}. The color pigment is at least one selected from the group consisting of a magenta pigment, a cyan pigment, a yellow pigment, and a black pigment. The oil liquid is at least partly an aromatic alcohol represented by general formula A below. The polyvinyl alcohol is represented by general formula B below. 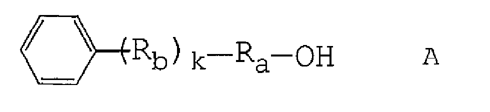 where Rₐ represents an aliphatic hydrocarbon group having 1 to 5 carbon atoms, R_{b} represents -O-or -CH₂O-, and k represents 0 or 1. 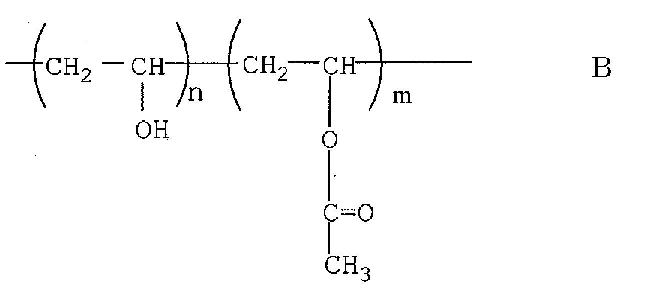 wherein n and m satisfy 0.4 ≤ n/(n + m) ≤ 0.73.

## Description

### FIELD

Embodiments described herein relate generally to an inkjet emulsion ink.

### BACKGROUND

Emulsion type inkjet ink containing an aqueous component and an oil component is proposed. It is because such an ink can have advantages of both aqueous ink and oil ink.

However, an inkjet emulsion ink suitable for printing on paper medium and that has desirable dryness and permeability, and the ability to form high-quality images on paper medium also in double-side printing is not available.

### DESCRIPTION OF THE DRAWINGS

FIG. 1 is a schematic diagram representing an example of an inkjet recording apparatus.
FIG. 2 is a schematic diagram representing an example of an inkjet head system having an ink circulation mechanism.

### DETAILED DESCRIPTION

In general, according to one embodiment, an inkjet emulsion ink includes an aqueous liquid, a color pigment dispersed in the aqueous liquid, an oil liquid, a white pigment dispersed in the oil liquid, and polyvinyl alcohol. The aqueous liquid content of the inkjet emulsion ink is W_{AQ}, and the oil liquid content of the inkjet emulsion ink is W_{OL}. The color pigment is at least one selected from the group consisting of a magenta pigment, a cyan pigment, a yellow pigment, and a black pigment. At least part of the oil liquid is an aromatic alcohol represented by the general formula A below. The polyvinyl alcohol is represented by the general formula B below. 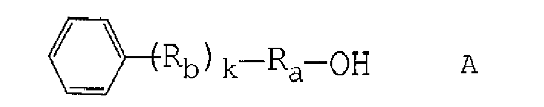 where Rₐ represents an aliphatic hydrocarbon group having 1 to 5 carbon atoms, R_{b} represents -O-or -CH₂O-, and k represents 0 or 1. 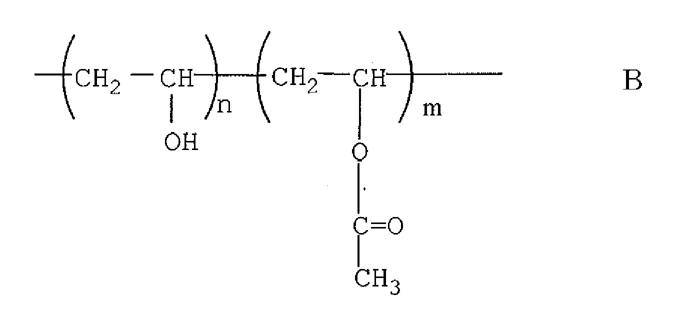 where n and m satisfy 0.4 ≤ n/(n + m) ≤ 0.73.

The following specifically describes embodiments.

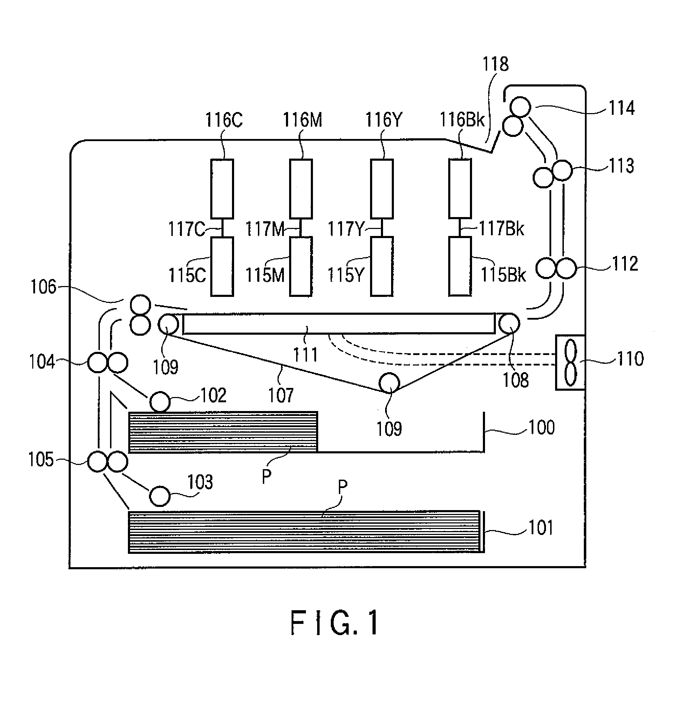

In the inkjet recording apparatus in the FIG. 1, paper cassettes 100 and 101 each of which holds paper P of different size. A paper feed roller 102 or 103 takes out the paper P in response to the selected paper size from the paper cassette 100 or 101 and conveys it to conveyance roller pairs 104 and 105 and a resist roller pair 106.

A tension is given to a conveyance belt 107 by a drive roller 108 and two driven rollers 109. Holes are provided at predetermined intervals on the surface of the conveyance belt 107, and for the purpose of adsorbing the paper P onto the conveyance belt 107, a negative-pressure chamber 111 connected to a fan 110 is installed in the inside of the conveyance belt 107. Conveyance roller pairs 112, 113, and 114 are installed in the downstream of the paper conveyance direction of the conveyance belt 107.

Four rows of inkjet heads that eject inks on a paper according to image data are disposed above the conveyance belt 107. An inkjet head 115C which ejects a cyan (C) ink, an inkjet head 115M which ejects a magenta (M) ink, an inkjet head 115Y which ejects a yellow (Y) ink, and an inkjet head 115Bk which ejects a black (Bk) ink are arranged in this order from the upstream. Further, these inkjet heads 115C, 115M, 115Y, and 115Bk are provided with a cyan (C) ink cartridge 116C, a magenta (M) ink cartridge 116M, a yellow (Y) ink cartridge 116Y, and a black (Bk) ink cartridge 116Bk, respectively, each of which contains an ink of each color. These cartridges are connected to the inkjet heads via tubes 117C, 117M, 117Y, and 117Bk, respectively.

An image forming operation of the apparatus for inkjet printing having a configuration as described above is described below.

First, image processing for printing by an image processor (not shown) is initiated, and image data for printing are transferred to the respective inkjet heads 115C, 115M, 115Y, and 115Bk. Also, a sheet of the paper P of a selected paper size is taken out one by one from the paper cassette 100 or 101 by the paper feed roller 102 or 103 and conveyed to the conveyance roller pairs 104 and 105 and the resist roller pair 106. The resist roller pair 106 corrects a skew of the paper P and conveys the paper at a predetermined timing.

The negative-pressure chamber 111 draws air through the holes of the conveyance belt 107, and therefore, the paper P is conveyed in a state that it is adsorbed onto the conveyance belt 107 in a lower side of the inkjet heads 115C, 115M, 115Y, and 115Bk. Thus, the respective inkjet heads 115C, 115M, 115Y, and 115Bk and the paper P can keep a fixed space from each other. The ink of each color is ejected from each of the inkjet heads 115C, 115M, 115Y, and 115Bk in synchronism with the timing for conveying the paper P from the resist roller pair 106. Thus, a color image is formed at a desired position on the paper P. The paper P having an image formed thereon is discharged into a paper discharge tray 118 by the conveyance roller pairs 112, 113, and 114.

Each ink cartridge stores an inkjet ink of an embodiment.

The inkjet emulsion ink according to one embodiment contains an aqueous liquid, an oil liquid, and an emulsifier that emulsifies the aqueous liquid and the oil liquid. A white pigment is dispersed in the oil liquid. It is known that a white pigment in an inkjet emulsion ink has the tendency to settle. Thus, in an emulsion ink that contains a white pigment, there is generally a tendency for the phase separation between the oil phase and the aqueous phase. Such tendencies also exist in the inkjet emulsion ink of the embodiment, and the separation between the aqueous-liquid aqueous phase and the oil-liquid oil phase is likely to occur.

The separation between the aqueous phase and the oil phase in the inkjet emulsion ink is detrimental to the ejection stability at the printer head nozzles, and possibly leads to poor image quality. This can be circumvented with the use of an inkjet head having an ink circulation mechanism, as it enables the ink to be uniformly re-emulsified even after a certain degree of aqueous-oil phase separation. As a result, the stability of ejection performance can be improved.

It is therefore preferable that an inkjet head having an ink circulation mechanism be used in an inkjet recording apparatus that forms an image with the inkjet emulsion ink of the embodiment.

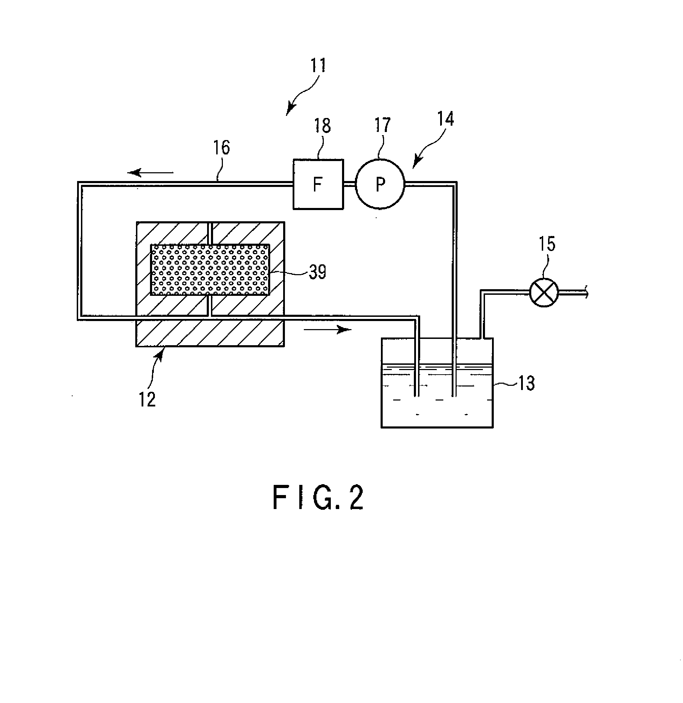

FIG. 2 illustrates an example of an inkjet head having an ink circulation mechanism.

As illustrated in FIG. 2, an inkjet head system 11 having an ink circulation mechanism includes an inkjet head 12 that ejects droplets onto a recording medium such as paper, a tank 13 that supplies the ink to the inkjet head 12, and a circulation mechanism 14 that circulates liquid between the inkjet head 12 and the tank 13. The tank 13 stores the inkjet ink of the embodiment. The tank 13 has an air open valve 15. With the air open valve 15 open, the pressure inside the tank 13 can become atmospheric pressure. With the air open valve 15 closed, the pressure inside the tank 13 can undergo changes from the atmospheric pressure.

The circulation mechanism 14 includes a circular circulation channel 16. A pump 17 and a filter member 18 are provided one after another on the circulation channel 16 along the way. The pump 17 on the upstream side circulates the inkjet ink through the circulation channel 16 in the direction of arrow. The filter member 18 provided downstream of the pump 17 collects foreign objects that may be present in the ink.

The porous member 39 is housed inside the inkjet head 12. The porous member 39 is capable of absorbing and retaining the ink.

As noted above, the ink of the embodiment is an emulsion ink containing an aqueous liquid and an oil liquid. By the inclusion of the oil liquid, the ink of the embodiment excels in permeability and dryness, as will be described later. In the ink of the embodiment, the color pigment is contained in the aqueous liquid, and the white pigment is contained in the oil liquid. The color pigment is selected from the group consisting of a magenta pigment, a cyan pigment, a yellow pigment, and a black pigment.

In contrast to the oil liquid that has large permeability to paper medium, the aqueous liquid has small permeability to paper medium. Because the color pigment is contained in the aqueous liquid in the ink of the embodiment, the color pigment tends to remain on the surface layer of the paper medium. Image density can thus be improved on the surface. The inkjet emulsion ink of the embodiment excels in dryness because of the permeability of the oil liquid.

Ink dryness can be explained as follows. As a rule, ink dryness is related to ink permeability: the better the dryness, the higher the permeability. Specifically, the dryness of the ink is facilitated as the amount of remaining liquid on the surface is reduced by the permeation of the liquid component of the ink quickly into the paper medium. In this way, high-speed printing can be accommodated. The high-permeation inks currently in use for high-speed printing are primarily oil inks and solvent inks, namely, non-aqueous inks.

However, use of non-aqueous ink for recording on paper medium such as plain paper leads to poor image quality. It is particularly difficult to reduce strikethrough and lower the image density on the back side. Because the aqueous liquid is contained with the oil liquid, the ink of the embodiment can maintain image quality on the both sides of paper medium, without losing dryness and permeability.

Further, in the ink of the embodiment, the oil liquid containing the white pigment easily permeates the paper medium. Because the pigment that reaches the back side of the paper medium is white, the image density on the back side of the paper medium is lower than that seen with the ink that contains only the color pigment. In this manner, in the embodiment, image density in double-side printing can be improved, in addition to improving permeability and dryness.

As used herein, the "paper medium" generally refers to various kinds of paper medium intended for printing. The paper medium can be broadly classified into enamel paper and non-enamel paper, the former including art paper and coat paper to which materials for improving print characteristics are applied, and the latter representing a class of papers that exploits the characteristics of the paper itself. The paper medium has a variety of applications, such as in books, documents, newspapers, wrapping, and printer papers. The paper medium also includes thick papers such as cardboards, paper containers, and boxboards. For example, so-called plain paper such as copy paper to be used in a copier or a printer for office or home use is a typical paper medium. The ink of the embodiment can be particularly effective for non-enamel papers such as plain papers and cardboards. Among the enamel papers, the ink of the embodiment is particularly effective for papers that are colored black.

In the inkjet emulsion ink of the embodiment, the color pigment is contained in the aqueous liquid.

The color pigment is selected from a magenta pigment, a cyan pigment, a yellow pigment, and a black pigment, and may be used as a dispersion of a self-dispersible pigment in water. The self-dispersible pigment is a pigment to which at least one functional group selected from a carbonyl group, a carboxyl group, a hydroxyl group, and a sulfone group or a salt thereof is bound through a surface treatment. Examples of the surface treatment include a vacuum plasma treatment, a diazo coupling treatment, and an oxidation treatment. The self-dispersible pigment is obtained by grafting a functional group or a molecule containing a functional group on the surface of a pigment through such a surface treatment.

The self-dispersible color pigment has very high dispersion stability in water. Thus, the dispersion stability of the color pigment is maintained even in an ink having a large proportion of the oil liquid. Agglomerates are few, and there is no clogging of the nozzles in the inkjet head. Further, the self-dispersible pigment is highly absorptive for paper medium, in addition to having excellent dispersion stability in water.

It follows from this that an ink containing only the self-dispersible color pigment for its entire pigment component would excel in ejection stability. Ink with excellent ejection stability can form a high-quality image.

The pigment contained in the pigment dispersion is not particularly limited, and any of an inorganic pigment and an organic pigment may be used. Examples of the inorganic pigment include iron oxide. Further, a carbon black produced by a known method such as a contact method, a furnace method, or a thermal method can be used.

As the organic pigment, for example, an azo pigment (such as an azo lake pigment, an insoluble azo pigment, a condensed azo pigment, or a chelate azo pigment), a polycyclic pigment (such as a phthalocyanine pigment, a perylene pigment, a perinone pigment, an anthraquinone pigment, a quinacridone pigment, a dioxazine pigment, a thioindigo pigment, an isoindolinone pigment, or a quinophthalone pigment), a dye chelate (such as a basic dye type chelate, or an acid dye type chelate), a nitro pigment, a nitroso pigment, Aniline Black or the like can be used.

Specific examples of the carbon black which is used as the black ink include No. 2300, No. 900, MCF88, No. 33, No. 40, No. 45, No. 52, MA7, MA8, MA100, and No. 2200B (all of which are manufactured by Mitsubishi Chemical Corporation), Raven 5750, Raven 5250, Raven 5000, Raven 3500, Raven 1255, and Raven 700 (all of which are manufactured by Columbian Chemicals Company), Regal 400R, Regal 330R, Regal 660R, Mogul L, Monarch 700, Monarch 800, Monarch 880, Monarch 900, Monarch 1000, Monarch 1100, Monarch 1300, and Monarch 1400 (all of which are manufactured by Cabot Corporation), and Color Black FW1, Color Black FW2, Color Black FW2V, Color Black FW18, Color Black FW200, Color Black S150, Color Black S160, Color Black S170, Printex 35, Printex U, Printex V, Printex 140U, Special Black 6, Special Black 5, Special Black 4A, and Special Black 4 (all of which are manufactured by Degussa AG).

Specific examples of the pigment which is used in the yellow ink include C.I. Pigment Yellow 1, C.I. Pigment Yellow 2, C.I. Pigment Yellow 3, C.I. Pigment Yellow 12, C.I. Pigment Yellow 13, C.I. Pigment Yellow 14C, C.I. Pigment Yellow 16, C.I. Pigment Yellow 17, C.I. Pigment Yellow 73, C.I. Pigment Yellow 74, C.I. Pigment Yellow 75, C.I. Pigment Yellow 83, C.I. Pigment Yellow 93, C.I. Pigment Yellow 95, C.I. Pigment Yellow 97, C.I. Pigment Yellow 98, C.I. Pigment Yellow 109, C.I. Pigment Yellow 110, C.I. Pigment Yellow 114, C.I. Pigment Yellow 128, C.I. Pigment Yellow 129, C.I. Pigment Yellow 138, C.I. Pigment Yellow 150, C.I. Pigment Yellow 151, C.I. Pigment Yellow 154, C.I. Pigment Yellow 155, C.I. Pigment Yellow 180, and C.I. Pigment Yellow 185.

Specific examples of the pigment which is used in the magenta ink include C.I. Pigment Red 5, C.I. Pigment Red 7, C.I. Pigment Red 12, C.I. Pigment Red 48(Ca), C.I. Pigment Red 48(Mn), C.I. Pigment Red 57(Ca), C.I. Pigment Red 57:1, C.I. Pigment Red 112, C.I. Pigment Red 122, C.I. Pigment Red 123, C.I. Pigment Red 168, C.I. Pigment Red 184, C.I. Pigment Red 202, and C.I. Pigment Violet 19.

Specific examples of the pigment which is used in the cyan ink include C.I. Pigment Blue 1, C.I. Pigment Blue 2, C.I. Pigment Blue 3, C.I. Pigment Blue 15:3, C.I. Pigment Blue 15:4, C.I. Pigment Blue 15:34, C.I. Pigment Blue 16, C.I. Pigment Blue 22, C.I. Pigment Blue 60, C.I. Vat Blue 4, and C.I. Vat Blue 60.

Since the ink is an inkjet ink, it is preferred that the pigment has an average particle diameter of from about 10 to 300 nm. It is more preferred that the pigment has an average particle diameter of from about 10 to 200 nm.

The average particle diameter of the pigment can be measured using a particle diameter analyzer according to a dynamic light scattering method. An example of a particle diameter analyzer is HPPS (Malvern Instruments Ltd.).

The content of the color pigment in the ink is not particularly limited, however, from the viewpoint of a coloring property and the dispersion stability of the pigment, it is preferably from about 2 to 20% by weight, more preferably from about 2 to 6% by weight.

In the ink of the embodiment, the effect of the oil liquid becomes too large if the amount of aqueous liquid is too small, and it becomes difficult to suppress permeation of the ink into the paper medium. Further, a sufficient distance cannot be maintained between the color pigment particles in the aqueous liquid. Because the dispersion stability of the color pigment becomes insufficient, the color pigment may agglomerate, and lower the ejection stability of the ink. On the other hand, desired levels of permeability cannot be obtained if the amount of aqueous liquid is too large. In this case, the drying time of the ink tends to be longer, which may lead to paper medium distortion.

Such problems can be avoided if the aqueous liquid content W_{AQ} of the ink of the embodiment is 15 to 40% by weight of the total ink. More preferably, the aqueous liquid content W_{AQ} is 25 to 30% by weight of the total ink.

It is preferred that at least 50% by weight of the aqueous liquid is water. If the aqueous liquid were entirely water, the effect of the aqueous liquid on the dispersion stability of the color pigment is decreased, and therefore, the storage stability of the ink is improved.

The aqueous liquid may contain a water-soluble compound. In this case, by adjusting the viscosity of the ink, a preserving property, a moisture retaining property, a defoaming property, and the like can be improved. Also, the ejection stability of the ink is further more improved. The water-soluble compound may be a solid or a liquid.

Examples of the water-soluble compound include glycerin, diglycerin, polyglycerin, ethylene glycol, diethylene glycol, triethylene glycol, polyethylene glycol, tripropylene glycol, polypropylene glycol, 1,2,6-hexanetriol, 1,2,4-butanetriol, 1,2,3-butanetriol, 3-methyl-1,3,5-pentantriol, sorbitol, mannitol, and maltitol. Further, derivatives of these compounds can also be used.

In the ink of the embodiment, the white pigment is contained in the oil liquid. The white pigment may be at least one selected from the group consisting of titanium oxide, zinc oxide, lead white, zinc sulfide, and barium sulfate. The advantageous characteristics of the white pigment lie in the whiteness and concealability. The white pigment hardly absorbs visible rays, and can thus provide high concealability. Strikethrough is suppressed as the white pigment contained in the oil liquid reaches the back side of the paper medium.

As with the color pigment, the average particle size of the white pigment preferably ranges from about 10 to 300 nm. More preferably, the pigment average particle size is about 10 to 200 nm. The average particle size of the white pigment can be determined as above.

The white pigment content in the ink is not particularly limited, and is preferably about 2 to 6% by weight, though desirable effects can be obtained with the content of about 2 to 20% by weight.

In the ink of the embodiment, the resulting image quality may deteriorate if the amount of oil liquid is too large. On the other hand, if the amount of oil liquid is too small, the effects of the aqueous liquid may increase, and the dryness may be lost. Such problems can be avoided if the oil liquid content W_{OL} is 85 to 60% by weight of the total ink. The oil liquid content is preferably 65 to 75% by weight of the total ink.

At least a part of the oil liquid is an aromatic alcohol represented by the following general formula A. This aromatic alcohol has a solubility in water at 25°C of less than 10% by weight and a boiling point of 180°C (1013 hPa) or higher. In view of this, it is suitable for inkjet printing. 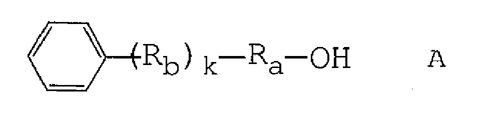 where Rₐ represents an aliphatic hydrocarbon group having 1 to 5 carbon atoms, R_{b} represents -O- or -CH₂-, and k represents 0 or 1.

As the hydrocarbon group Rₐ, for example, -CH₂-, -(CH₂)₂-, -(CH₂)₃-, -(CH₂)₄₋, -CH(CH₃)CH₂-_{,} and -CH₂CH(CH₃)- can be used.

Examples of the compound represented by general formula A include benzyl alcohol (Cas. 100-51-6), 2-phenylethyl alcohol (Cas. 60-12-8), 3-phenyl-1-propanol (Cas. 122-97-4), 4-phenyl-1-butanol (Cas. 3360-41-6), 2-phenyl-l-propanol (Cas. 1123-85-9), 1-phenyl-2-propanol (Cas. 14898-87-4), phenoxyethanol (Cas. 122-99-6), phenoxypropanol (Cas. 770-35-4, Cas. 4169-04-4), phenyl diglycol (Cas. 104-68-7), and benzyl glycol (Cas. 622-08-2). These aromatic alcohol compounds may be used alone or in combination of two or more kinds thereof.

Considering storage stability and ejection performance of the ink, benzyl alcohol (Rₐ: -CH₂-, k = 0), phenyl glycol (Rₐ: -(CH₂)₂-, R_{b}: -0-), phenoxypropanol (Rₐ: -CH(CH₃)CH₂-, R_{b}: -O-), phenyl propylene glycol (Rₐ: -CH₂CH (CH₃)-, R_{b}: -O-), and benzyl glycol (Rₐ: -(CH₂)₂-, R_{b}: -CH₂O-) are particularly preferable.

The aromatic alcohol preferably accounts for at least 50% by weight of the oil liquid. The remaining oil liquid in the paper clauses bleed or produces gloss, and the print quality deteriorates. Because the aromatic alcohol does not usually remain in the paper, print quality can be improved if the oil liquid were entirely the aromatic alcohol.

The oil liquid may contain a water-insoluble organic solvent, examples of which include hexyl glycol, 2-ethylhexyl glycol, 2-ethylhexyl diglycol, dibutyl diglycol, n-nonanol, n-hexanol, n-heptanol, diethyl adipate, ethylhexyl palmitate, isocetyl myristate, and benzyl propionate. Other examples include mineral oil such as paraffinic oil, naphthenic oil, spindle oil, and machine oil; vegetable oil such as linseed oil, castor oil, soy oil, and tung oil; and hydrocarbons having 30 carbon atoms or fewer.

It is preferred that the ratio (W_{AQ}/W_{OL}) of the aqueous liquid content W_{AQ} to the oil liquid content W_{OL} is within the following range:
0.14 < (W_{AQ}/W_{OL}) < 0.7.

If the ratio is within the range, an ink which properly penetrates into a paper medium is obtained, and therefore, a high-quality image can be formed on the paper medium. Moreover, deformation of the paper medium such as curling does not at all occur.

It is more preferred that the ratio (W_{AQ}/W_{OL}) of the aqueous liquid content W_{AQ} to the oil liquid content W_{OL} is within the following range: 0.2 < (W_{AQ/}W_{OL}) < 0.5.

The aqueous liquid and the oil liquid are emulsified by an emulsifier. In the embodiment, the emulsifier is a polyvinyl alcohol (hereinafter, "PVA") represented by the following general formula B. 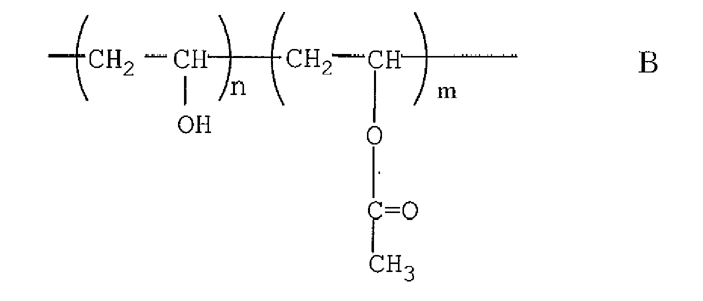 where n and m satisfy 0.4 ≤ n/ (n + m) ≤ 0.73.

If the amount of PVA in the ink is too small, emulsion stability may become insufficient. On the other hand, if too large, the ink viscosity may increase. Such problems can be avoided if the PVA content in the ink is 0.1 to 3% by weight of the total ink. The PVA content in the ink is more preferably 0.5 to 2% by weight, most preferably 1 to 2% by weight.

To ensure ejection stability through the inkjet nozzles, a viscosity of an aqueous solution containing 4% by weight of the PVA at 20°C is preferably less than 10 mPa.s. If it is a PVA satisfying the following relationship: (n + m) < 1000 in the general formula B, the above-mentioned viscosity can be secured. It is more preferred that the viscosity of the aqueous solution containing 4% of the PVA at 20°C is less than 8 mPa.s.

The PVA has very high hydrophilicity and is soluble in warm water. These properties are distinct features for a synthetic polymer, and the PVA is widely used as a binder such as an adhesive. Further, the PVA can control the balance between hydrophilicity and lipophilicity, and therefore is widely used also as an emulsifier.

The present inventors focused attention on the saponification value of the PVA. The saponification value is represented by 100 x n/(n + m) (mol%) using n and m in the above general formula B. By combining the PVA having a saponification value of 40 to 73 mol%, a color pigment-dispersed aqueous liquid and a white pigment-dispersed oil liquid, it becomes possible to obtain a desirable emulsion ink also suitable for double-side printing.

In the ink according to one embodiment, the aqueous liquid and the oil liquid are contained in an emulsified liquid. The aqueous liquid and the oil liquid are different in the rate of penetration into paper. Specifically, the aqueous liquid has a low penetration rate, and the oil liquid penetrates faster than the aqueous liquid. Accordingly, the aqueous liquid and the oil liquid start separating from each other when they permeate in the paper medium.

The pigment contained as the coloring material can be stably dispersed in the emulsified liquid in a state that the aqueous liquid and the oil liquid are emulsified. When the aqueous liquid and the oil liquid separate from each other, the dispersion stability of the pigment in the ink is decreased. The compatibility between the aqueous liquid and the oil liquid is lost, and therefore, aggregation of the pigment proceeds voluntarily.

In the inkjet emulsion ink of the embodiment, the color pigment is contained in the aqueous liquid, and the white pigment is contained in the oil liquid. Because the color pigment contained in the aqueous liquid remains near the paper surface, the image density obtained with the ink of the embodiment is higher than that obtained with oil ink. The white pigment contained in the oil liquid permeates the paper as the oil liquid permeates, and reaches the back side of the paper. As a result, the image density on the back side can be lowered, and the print quality can be improved.

For the preparation of the inkjet emulsion ink of the embodiment, a predetermined amount of PVA is first added to the aqueous liquid, and the mixture is heated to about 80 to 90°C using a hot stirrer or the like to prepare a PVA solution. The resulting solution is left at ordinary temperature, and a predetermined color pigment is added after cooling to room temperature. The color pigment is then dispersed in the PVA-containing aqueous liquid using a magnetic stirrer or the like to obtain a color pigment dispersion.

Meanwhile, the white pigment is added to the oil liquid, and is stirred while heating the mixture to about 90 to 100°C using a hot stirrer or the like. The white pigment is dispersed in the oil liquid in this manner to obtain a white pigment dispersion.

Thereafter, the white pigment dispersion is stirred at about 1,000 to 1,500 rpm using a magnetic stirrer or the like. The color pigment dispersion is then added dropwise to the white pigment dispersion using a tubing pump or the like. After all of the color pigment dispersion is dropped, the mixture is stirred for about 1 to 2 hours to obtain the inkjet emulsion ink of the embodiment.

Since the ink is for inkjet printing, the ink according to one embodiment should have a viscosity suitable for ejection from a nozzle of a head in an inkjet printer. Specifically, the viscosity of the ink at 25°C is preferably from 5 to 50 mPa.s, more preferably from 5 to 30 mPa.s. If the viscosity is 30 mpa.s or less, the controlled head temperature during an ejection operation can be set to a relatively low temperature.

In order to adjust the properties of the ink such as ejection performance or penetrability to optimum conditions, a surfactant may be blended in the ink.

Examples of surfactant include polyoxyethylenealkyl ether, polyoxyalkylenealkyl ether, polyoxyethylene polycyclic phenylether, polyoxyalkylene polycyclic phenylether, glycerin fatty acid ester, and EO adducts of dimethylolheptane.

Acetyleneglycol surfactants and fluorosurfactants also can be used. Examples of acetyleneglycol surfactant include 2,4,7,9-tetramethyl-5-decyne-4, 7-diol, 3, 6-dimethyl-4-octine-3, 6-diol, and 3, 5-dimethyl-l-hexin-3-ol. Specifically, Surfynol 104, 61, 465, 485, and TG (Air Products) can be used, for example.

Examples of fluorosurfactant include a perfluoroalkylethylene oxide adduct, perfluoroalkylamine oxide, perfluoroalkyl carboxylate, and perfluoroalkyl sulfonic acid. Specifically, Megafac F-443, F-444, F-470, F-494 (DIC Corporation), Novec FC-430, FC-4430 (3M), and Surflon S-141, S-145, S-111N, S-113 (AGC Seimi Chemical Co., Ltd.) can be used.

The surfactant can exhibit its effect without causing any inconvenience, as long as it is about 1.0% by weight or less of the total ink.

Additives such as a pH adjuster, a preservative, and/or an anti-fungal agent may be blended, as required. Examples of pH adjuster include potassium dihydrogen phosphate, disodium hydrogen phosphate, and sodium hydroxide.

Examples of preservative and anti-fungal agent include sodium benzoate, pentachlorophenol sodium, 2-pyridinethiol-l-oxide sodium, sodium sorbate, sodium dehydroacetate, and 1,2-dibenzisothiazolin-3-one (Proxel CRL, Proxel BDN, Proxel GXL, Proxel XL-2, Proxel TN; available from ICI).

Print image quality and storage stability can be further improved by blending these additives.

Examples of the inkjet emulsion ink are described below.

Aqueous liquids presented in Table 1, and oil liquids presented in Table 2 were prepared.

**Table 1**

| Abbreviation | Compound name |
|---|---|
| W1 | Water |
| W2 | Glycerin |

**Table 2**

| Abbreviation | Compound name |
|---|---|
| OL1 | Benzyl alcohol (Tokyo Ohka Kogyo Co., Ltd.) |
| OL2 | Benzyl glycol (Nippon Nyukazai Co., Ltd.; BzG) |
| OL3 | Phenylene propylene glycol (Nippon Nyukazai Co., Ltd.; PhFG) |
| OL4 | Mineral oil |

The compounds OL1, OL2, and OL3 are all aromatic alcohols represented by the following general formula A.

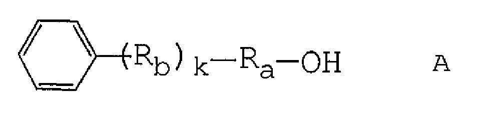

The compounds E1 to E4 presented in Table 3 below were prepared as the emulsifiers.

**Table 3**

| Emulsifier | Compounds (manufacturer) | n/ (n + m) |
|---|---|---|
| E1 | Gosenol KP-08R (Nippon Synthetic Chemical Industry Co., Ltd.) | 0.72 |
| E2 | Gosenol NK-05R (Nippon Synthetic Chemical Industry Co., Ltd.) | 0.73 |
| E3 | Gosenol GL-05 (Nippon Synthetic Chemical Industry Co., Ltd.) | 0.88 |
| E4 | LM-25 (Kuraray Co., Ltd.) | 0.38 |

In Table 3, the compounds E1, E2, E3, and E4 are all PVAs represented by the general formula B below.

Table 3 also presents the n/(m+n) values using m and n in general formula B. In contrast to the n/(n + m) values of 0.4 to 0.73 in E1 and E2, the n/(n + m) value was large, 0.88 in E3, and small, 0.38 in E4.

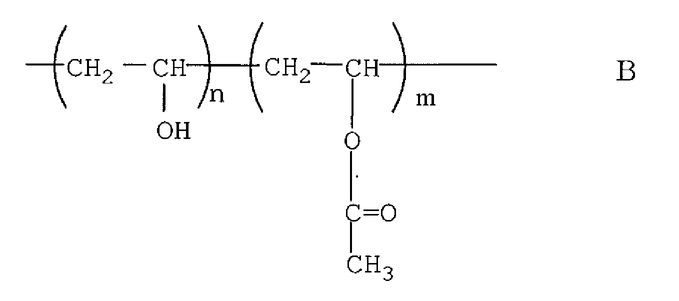

Ink samples No. 1 to No. 21 were prepared by blending the components in the formulations presented in Table 4 below. In Table 4, the amounts of aqueous liquid, oil liquid, and emulsifier in the ink are percent by weight.

The following self-dispersible pigments were used as the color pigments.
D1: Cab-O-JET465M (Cabot)
D2: Cab-O-JET470Y (Cabot)
D3: Cab-O-JET450C (Cabot)

In all self-dispersible pigments, the pigments having surface functional groups were dispersed in water. The amount of water in the dispersion is contained in the amount of aqueous liquid in Table 4. The amounts of solid component (color pigment) are also presented in Table 4.

Renol White T-HW30 (Clariant) was prepared as the white pigment. All samples contained the white pigment except for ink No. 16. The white pigment in all the other inks was 3% by weight of the total ink.

For the preparation of the ink samples, a predetermined amount of PVA was first added to the aqueous liquid, and the mixture was heated to about 80°C using a hot stirrer to prepare a PVA-containing aqueous liquid. The resulting solution was left at ordinary temperature, and a predetermined color pigment was added after cooling to room temperature. The color pigment was then dispersed in the PVA-containing aqueous liquid using a magnetic stirrer to obtain a color pigment dispersion.

Meanwhile, the white pigment was added to the oil liquid, and was heated to about 100°C using a hot stirrer. The white pigment was dispersed in the oil liquid using a magnetic stirrer to obtain a white pigment dispersion.

Thereafter, the white pigment dispersion was stirred at about 1,500 rpm using a magnetic stirrer. The color pigment dispersion was then added dropwise to the white pigment dispersion using a tubing pump. After all of the color pigment dispersion was dropped, the mixture was stirred for 1 hour to obtain the ink sample Nos. 1 to 15, and Nos. 17 to 21.

The ink sample No. 16 was prepared in the same manner, by dropping the color pigment dispersion in the stirred oil liquid.

**Table 4**

| No. | Aquecous liquid | | pigment | | | Oil liquid | | | | Emulsifier | | | |
|---|---|---|---|---|---|---|---|---|---|---|---|---|---|
| | W1 | W2 | D1 | D2 | D3 | OL1 | OL2 | OL3 | OL4 | E1 | E2 | E3 | E4 |
| 1 | 28 | | 3 | | | 65 | | | | 1 | | | |
| 2 | 28 | | | 3 | | 65 | | | | 1 | | | |
| 3 | 28 | | | | 3 | 65 | | | | 1 | | | |
| 4 | 28 | | 3 | | | | 65 | | | 1 | | | |
| 5 | 28 | | 3 | | | | | 65 | | 1 | | | |
| 6 | 28 | | 3 | | | 65 | | | | | | 1 | |
| 7 | 28 | | 3 | | | | 65 | | | | | 1 | |
| 8 | 28 | | 3 | | | | | 65 | | | | 1 | |
| 9 | 25 | | 3 | | | 69 | | | | | 1 | | |
| 10 | 42 | | 3 | | | 52 | | | | | 1 | | |
| 11 | 25 | 5 | 3 | | | 64 | | | | | 1 | | |
| 12 | 28 | | 3 | | | | | | 65 | 1 | | | |
| 13 | 30 | | 3 | | | 61 | | | | | | | 3 |
| 14 | 15 | | 3 | | | 76 | | | | 1 | | | |
| 15 | 14 | 2 | 3 | | | 79 | | | | 1 | | | |
| 16 | 31 | | 3 | | | 65 | | | | 1 | | | |
| 17 | 25.95 | | 3 | | | 68 | | | | 0.05 | | | |
| 18 | 25.8 | | 3 | | | 65 | | | | 3.2 | | | |
| 19 | 25.9 | | 3 | | | 68 | | | | 0.1 | | | |
| 20 | 25 | | 3 | | | 66 | | | | 3 | | | |
| 21 | 11 | | 3 | | | 82 | | | | 1 | | | |

Table 5 below presents the ratio (W_{AQ}/W_{OL}) of aqueous liquid content (W_{AQ}) to oil liquid content W_{OL}).

**Table 5**

| No. | W_{AQ}/W_{OL} |
|---|---|
| 1 | 0.43 |
| 2 | 0.43 |
| 3 | 0.43 |
| 4 | 0.43 |
| 5 | 0.43 |
| 6 | 0.43 |
| 7 | 0.43 |
| 8 | 0.43 |
| 9 | 0.36 |
| 10 | 0.81 |
| 11 | 0.39 |
| 12 | 0.43 |
| 13 | 0.49 |
| 14 | 0.20 |
| 15 | 0.18 |
| 16 | 0.48 |
| 17 | 0.38 |
| 18 | 0.40 |
| 19 | 0.38 |
| 20 | 0.38 |
| 21 | 0.13 |

Storage stability of the ink samples was examined.

The inks were stored in a thermostat bath at 65°C. After one week, the presence or absence of separation and the viscosity increase ratio of the inks were examined. The presence or absence of separation was visually observed. The percentage increase of viscosity was calculated according to the formula: 100((V₇-V₀)/V₀). The V₇ denotes the viscosity after one week, and the V₀ denotes the initial viscosity. The viscosity was measured using a cone-plate type viscosity meter, VISCOMETER TV-22 (manufactured by Toki Sangyo Co., Ltd.).

In comprehensive consideration of the presence or absence of separation and the percentage increase of viscosity of the ink, the storage stability was evaluated according to the following criteria. The result is "Poor" when there is separation, or when the percentage viscosity increase is ± 10% or more. The result is "Good" when the percentage viscosity increase is less than ± 10%, even in the presence of separation that disappears by stirring.

Toshiba Copy Paper was prepared as plain paper, and was printed to examine dryness and print quality. The CB-1 head (Toshiba Tec) was installed in the recording apparatus used.

For the evaluation of dryness, solid printing at 100% duty was performed on an area of 10 mm x 10 mm of the plain paper. After leaving the resulting plain paper as such for a predetermined time, new plain paper of the same type was laminated on the printed portion, and a weight of 300 g was placed thereon. After 10 seconds, the laminated plain paper was separated, and it was confirmed whether or not the ink was adhered.

The time until the new plain paper was laminated after the solid printing was set to 5 seconds, 10 seconds, and 30 seconds. In each of the cases, adhesion of the ink was visually examined and evaluation was performed according to the following criteria.
A: No adhesion was observed when the set time was 5 seconds.
B: Adhesion was observed when the set time was 5 seconds and no attachment was observed when the set time was 10 seconds.
C: Adhesion was observed when the set time was 10 seconds and no adhesion was observed when the set time was 30 seconds.

For the evaluation of print quality, text printing and solid image printing were made on the plain paper. The printed texts were visually checked for bleeding and feathering. Further, solid print image density was examined using an X-Rite densitometer, and the image density on the front and back of the paper was examined.

The shape index of the dots in the printed image was calculated using the formula (circumferential length)²/(4π x area).The shape index is a measure of evaluation quantifying the extent of bleeding. The circumferential length and area were determined by image analysis using a dot analyzer. The value approaches 1 as the dot shape irregularities become smaller. Evaluation was made according to the criteria presented in Table 6 below, by considering the front image density, back image density, and shape index together.

**Table 6**

| Evaluation | Image density (Front) | Image density (Back) | Shape index |
|---|---|---|---|
| A | 0.9 or more | 0.2 or less | 1.0 or more and less than 2.2 |
| B | 0.9 or more | 0.3 or less | 1.0 or more and less than 2.2 |
| C | 0.8 or more and less than 0.9 | Less than 0.4 | 2.2 or more and less than 2.6 |
| D | Less than 0.8 | 0.4 or more | 2.6 or more |

Table 7 below summarizes the storage stability, dryness, and print quality of each ink.

**Table 7**

| Ink No. | Storage stability | Dryness | Print quality (Front) | Print quality (Back) |
|---|---|---|---|---|
| 1 | Good | B | B | A |
| 2 | Good | B | B | A |
| 3 | Good | B | B | A |
| 4 | Good | B | B | A |
| 5 | Good | B | B | A |
| 6 | Poor | B | C | B |
| 7 | Poor | B | C | B |
| 8 | Poor | B | c | B |
| 9 | Good | B | B | B |
| 10 | Good | C | B | B |
| 11 | Good | B | B | B |
| 12 | Poor | C | D | C |
| 13 | Poor | C | C | C |
| 14 | Good | B | B | A |
| 15 | Good | A | B | A |
| 16 | Good | B | C | D |
| 17 | Good | C | B | C |
| 18 | Good | C | B | C |
| 19 | Good | B | B | A |
| 20 | Good | B | B | A |
| 21 | Good | B | C | B |

Samples fail when the result for storage stability is "Poor". Samples also fail when the result of evaluation for any of the criteria is "D".

As presented in Table 7, storage stability is poor in all of the ink Nos. 6 to 8. As presented in Table 4, the PVA contained in the ink Nos. 6 to 8 is E3, and has an n/(n + m) value greater than 0.73, as presented in Table 3. With an n/(n + m) value greater than 0.73, emulsion stability cannot be obtained, and the required storage stability cannot be ensured, even in the presence of the predetermined PVA contained with the predetermined aromatic alcohol and the white pigment. The front print quality is also relatively poor in ink Nos. 6 to 8.

Ink No. 12 has poor storage stability. As presented in Table 4, oil liquid contained in ink No. 12 is OL4. The OL4 is not an aromatic alcohol represented by general formula A, but a mineral oil, as presented in Table 2. The storage stability of the ink cannot be improved without the predetermined aromatic alcohol, despite that the predetermined PVA and the white pigment are contained. The front print quality of the paper medium also drops considerably. The dryness is also relatively poor.

Ink No. 13 has poor storage stability. As presented in Table 4, the PVA contained in ink No. 13 is E4, which has an n/(n + m) value smaller than 0.4, as presented in Table 3. With an n/(n + m) value smaller than 0.4, emulsion stability cannot be obtained, even in the presence of the predetermined PVA contained with the predetermined aromatic alcohol and the white pigment. Accordingly, the required storage stability cannot be ensured. Further, ink No. 13 has relatively poor print quality on the front and the back. The back print quality and dryness are also relatively poor.

The back print quality is considerably poor in ink No. 16. The poor back print quality is due to the absence of the white pigment, despite that the predetermined aromatic alcohol and the predetermined PVA were contained. In other words, the back image density was high, and strikethrough was prominent. The front print quality was relatively poor.

The oil liquid contained in the ink Nos. 1 to 5, 9 to 11, 14, 15, and 17 to 21 is the aromatic alcohol represented by the general formula A. These inks also contained the white pigment and the predetermined PVA. The PVA is represented by the general formula B, and has an n/(n + m) value of 0.4 to 0.73.

By satisfying these conditions, the resulting inkjet emulsion ink had superior dryness and permeability. Further, the ink can form a high-quality image on paper medium. Particularly, the adverse effect of the back side image was almost absent in double-side printing.

It is generally known that dispersion stability cannot easily be improved in inks containing a white pigment. As described above, the ink of the embodiment contains the white pigment, and thus separation between the oil liquid and the aqueous liquid tends to occur if left for a certain time period. However, because the extent of separation is such that it disappears upon stirring, the pigment can be dispersed again with the use of an inkjet head having an ink circulation mechanism.

Thus, in forming images with the ink of the embodiment, it is preferable to use the ink with an inkjet head having an ink circulation mechanism. In this way, stable ejection performance can be obtained.

Ink Nos. 17 to 20 are basically inks of the same compositions, except that the PVA content is different. The aqueous liquid or oil liquid content also varies according to PVA content. As presented in Table 7, ink Nos. 19 and 20 have superior dryness and back print quality to ink Nos. 17 and 18. It can be seen from this that the composition of sample No. 19 is more preferable than the composition of sample No. 17, and that the composition of sample No. 20 is more preferable than the composition of sample No. 18. In other words, in the ink of the embodiment, the PVA content is preferably 0.1 to 3% by weight.

By comparing sample No. 1 and No. 10, sample No. 1 is superior in terms of dryness. Between sample No. 1 and No. 21, sample No. 1 is superior in terms of print quality.

In sample No. 1, the aqueous liquid and oil liquid contents are 28% by weight and 65% by weight, respectively, and the ratio (W_{AQ/}W_{OL}) of aqueous liquid content (W_{AQ}) to oil liquid content (W_{OL}) is 0.43.

In sample No. 10, the aqueous liquid and oil liquid contents are 42% by weight and 52% by weight, respectively, and the ratio W_{AQ} / W_{OL} is 0.81. In sample No. 21, the aqueous liquid and oil liquid contents are 11% by weight and 82% by weight, respectively, and the ratio W_{AQ} / W_{OL} is 0.13.

From these results, it can be said that the preferred aqueous liquid content is 15 to 40% by weight, and that the preferred oil liquid content is 60 to 85% by weight in the inkjet emulsion ink of the embodiment. The results also suggest that a preferable range also exists for W_{AQ}/W_{OL.}

The inkjet emulsion ink of the embodiment exhibits excellent dryness and permeability upon being ejected on paper medium, and can form a high-quality image on paper medium also in double-side printing.

Further, by the inkjet recording method of the embodiment, a high-quality image can be formed on paper medium also in double-side printing using an inkjet emulsion ink that exhibits excellent dryness and permeability upon being ejected on paper medium.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. An inkjet emulsion ink **characterized by** comprising:
an aqueous liquid whose content of the inkjet emulsion ink is WAQ;
at least one color pigment dispersed in the aqueous liquid, and is selected from the group consisting of a magenta pigment, a cyan pigment, a yellow pigment, and a black pigment;
an oil liquid that is at least partly an aromatic alcohol represented by general formula A below, and whose content of the inkjet emulsion ink is WOL; 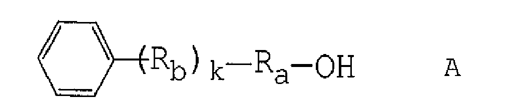 where Ra represents an aliphatic hydrocarbon group having 1 to 5 carbon atoms, Rb represents -O-or -CH20-, and k represents 0 or 1;
a white pigment dispersed in the oil liquid; and
a polyvinyl alcohol represented by following
general formula B 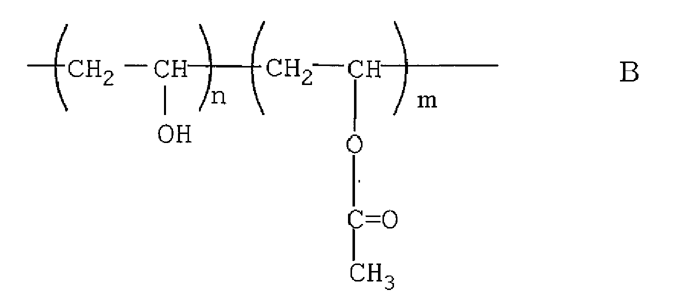 where n and m satisfy 0.4 ≤ n/(n + m) ≤ 0.73.

2. The ink according to claim 1, **characterized in that** the aqueous liquid content WAQ is 15 to 40% by weight.

3. The ink according to claim 1, **characterized in that** the oil liquid content WOL is 60 to 85% by weight.

4. The ink according to claim 1, **characterized in that** the polyvinyl alcohol accounts for 0.1 to 3 % by weight of the inkjet emulsion ink.

5. The ink according to claim 1, **characterized in that** the contents WAQ and WOL satisfy
0.14 < (WAQ/WOL) < 0.7.

6. The ink according to claim 5, **characterized in that** the contents WAQ and WOL satisfy
0.2 < (WAQ/WOL) < 0.5.

7. The ink according to claim 1, **characterized in that** at least 50% by weight of the aqueous liquid is water.

8. The ink according to claim 1, **characterized in that** at least 50% by weight of the oil liquid is the aromatic alcohol.

9. The ink according to claim 1, **characterized in that** a viscosity of an aqueous solution comprising 4% by weight of the polyvinyl alcohol at 20°C is less than 8 mPa.s.

10. The ink according to claim 1, **characterized in that** the polyvinyl alcohol accounts for 0.5 to 2% by weight of the inkjet emulsion ink.

11. The ink according to any one of the preceding claims, **characterized in that** a viscosity of the inkjet emulsion ink at 25°C is 5 to 30 mPa.s.

12. A method for inkjet printing **characterized by** comprising:
ejecting at least one type of ink composition from an inkjet head onto a paper medium to form an image, the ink composition being the inkjet emulsion ink according to any one of claims 1 to 11.

13. The method according to claim 12, **characterized in that** the image is formed using one type of ink composition.

14. The method according to claim 12, **characterized in that** the image is formed using two or more types of ink compositions of different colors.

15. The method according to any one of claim 12 through claim 14, **characterized in that** the inkjet head has an ink circulation mechanism.
